# EUROPEAN PATENT APPLICATION

(11) **EP 3 588 488 A1**
(43) Date of publication of application: **01.01.2020**
(21) Application number: 17898023.1
(22) Date of filing: 08.11.2017
(51) Int. Cl.: G10K 11/168, B32B 3/26, B60C 5/00, G10K 11/16

(54) **SOUND-ABSORBING MATERIAL**

(30) Priority: 27.02.2017 JP 2017034963
(71) Applicant: Nitto Denko Corporation, Ibaraki-shi, Osaka 567-8680 (JP)
(72) Inventor: HOSODA Kosuke, Ibaraki-shi Osaka 567-8680 (JP); OKAHARA Kai, Ibaraki-shi Osaka 5678680 (JP)
(74) Representative: Müller-Boré & Partner Patentanwälte PartG mbB
(86) International application number: PCT/JP2017/040236
(87) International publication number: WO 2018/154865

(57) **Abstract**

Provided is a sound-absorbing material that is thin and lightweight and is excellent in low-frequency sound-absorbing property. The sound-absorbing material of the present invention includes a laminated structure including: a perforated layer; and a porous layer, wherein the sound-absorbing material has a plurality of hole portions extending from a surface of the perforated layer opposite to the porous layer to a depth of a length L, provided that the length L satisfies 0<L≤D, D representing a thickness of the porous layer, in a thickness direction of the porous layer from a surface of the porous layer on a perforated layer side.

## Description

### Technical Field

The present invention relates to a sound-absorbing material.

### Background Art

As a sound-absorbing material, hitherto, there have been widely used a fiber-based material, such as glass wool, and a foamedmaterial, such as urethane foam. However, such materials each have a poor low-frequency sound-absorbing property, and hence a material having a large thickness needs to be used in order to achieve sufficient sound absorption at a low frequency.

In order to perform low-frequency sound absorption with a material having a limited thickness, a low-frequency sound-absorbing effect is generally obtained through resonance.

As a method of obtaining a low- frequency sound-absorbing effect through resonance, there are given a method involving using a plate or a membrane, and a method involving forming a Helmholtz resonator usinga slit or a perforated panel. Inparticular, a method involving forming a Helmholtz resonator using a slit or a perforated panel (in particular, a combination of the perforated panel and a backing layer) is often adopted. However, the perforated panel has a problem of being heavy in weight and a problem of being limited in degree of freedom in shape.

There is a report of a sound-absorbing material in which porous sheets, such as foamed plastics, and dense sheets having through-holes are alternately laminated (Patent Literature 1). However, this sound-absorbing material requires relatively thick dense sheets, and hence involves difficulty in achieving both a low-frequency sound-absorbing property and lightweightness.

### Citation List

### Patent Literature

[PTL 1] JP 04-37994 B2

### Summary of Invention

### Technical Problem

An object of the present invention is to provide a sound-absorbing material that is thin and lightweight and is excellent in low-frequency sound-absorbing property.

### Solution to Problem

According to one embodiment of the present invention, there is provided a sound-absorbing material, including a laminated structure including: a perforated layer; and a porous layer, wherein the sound-absorbing material has a plurality of hole portions extending from a surface of the perforated layer opposite to the porous layer to a depth of a length L, provided that the length L satisfies 0<L≤D, D representing a thickness of the porous layer, in a thickness direction of the porous layer from a surface of the porous layer on a perforated layer side.

In one embodiment, the length L satisfies (0.2×D)≤L≤D.

In one embodiment, a plurality of surface opening portions of the perforated layer formed by the plurality of hole portions have a maximum hole diameter of 1 mm or more.

In one embodiment, a surface opening ratio of the perforated layer, which is a ratio of the plurality of surface opening portions in an entire surface of the perforated layer, is 20% or less.

In one embodiment, the perforated layer has a thickness of less than 1 mm.

In one embodiment, the porous layer has a thickness of 1 mm or more.

In one embodiment, the sound-absorbing material has a total thickness of less than 300 mm.

In one embodiment, a material for forming the perforated layer includes at least one kind selected from a resin, a metal, a rubber, an inorganic material, a woven fabric, and a non-woven fabric.

In one embodiment, a material for forming the porous layer includes at least one kind selected from a porous polymer material, a porous metal material, a porous inorganic material, a porous woven fabric, a porous non-woven fabric, a fibrous material, and a polymer monolithic material.

### Advantageous Effects of Invention

According to the present invention, the sound-absorbing material that is thin and lightweight and is excellent in low-frequency sound-absorbing property can be provided.

### Brief Description of Drawings

FIG. **1** is a schematic cross-sectional view for illustrating a sound-absorbing material according to one embodiment of the present invention.
FIG. **2** is a schematic cross-sectional view for illustrating a sound-absorbing material according to a more specific embodiment of the present invention.
FIG. **3** is a schematic cross-sectional view for illustrating a sound-absorbing material according to a more specific embodiment of the present invention.
FIGS. **4** are perspective views for illustrating sound-absorbing materials according to some embodiments of the present invention.
FIG. **5** is a graph for showing the sound absorption coefficients of sound-absorbing materials (1) to (4).
FIG. **6** is a graph for showing the sound absorption coefficients of sound-absorbing materials (5) to (8).
FIG. **7** is a graph for showing the sound absorption coefficient of a sound-absorbing material (C1).
FIG. **8** is a graph for showing the sound absorption coefficients of sound-absorbing materials (C2) to (C5).

### Description of Embodiments

In the present invention, the term "perforated layer" means a layer having holes penetrating therethrough in the thickness direction of the layer (through-holes) . In the present invention, the term "porous layer" means a layer having a plurality of voids (pores) .

A sound-absorbing material of the present invention has a laminated structure including a perforated layer and a porous layer. The sound-absorbing material of the present invention may include any appropriate other layer as long as the sound-absorbing material has the laminated structure including the perforated layer and the porous layer in the stated order. Such other layer may have, for example, one or more through-holes.

Each of the perforated layer and the porous layer may be formed of a single layer, or may be a laminate of two or more layers.

It is preferred that: the sound-absorbing material of the present invention have the laminated structure including the perforated layer and the porous layer; and the perforated layer serve as an outermost layer.

The sound-absorbing material of the present invention has a plurality of hole portions extending from the surface of the perforated layer opposite to the porous layer to a depth of a length L, provided that the length L satisfies 0<L≤D, D representing the thickness of the porous layer, in the thickness direction of the porous layer from the surface of the porous layer on the perforated layer side. The length L satisfies preferably (0.2×D)≤L≤D, more preferably (0.5×D)≤L≤D, still more preferably (0.5×D)≤L≤D, particularly preferably (0.7×D)≤L≤D, most preferably L=D, from the viewpoint of allowing the effect of the present invention to be further expressed.

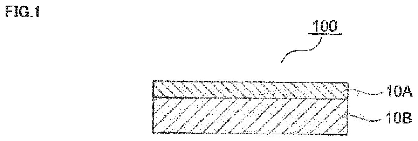

FIG. **1** is a schematic cross-sectional view for illustrating a sound-absorbing material according to one embodiment of the present invention. In FIG. **1****,** a sound-absorbing material **100** of the present invention includes a perforated layer **10A** and porous layer **10B.** In FIG. **1****,** the perforated layer **10A** and the porous layer **10B** serve as outermost layers. In FIG. **1****,** the hole portions extending from the surface of the perforated layer **10A** opposite to the porous layer **10B** to a depth of the length L, provided that the length L satisfies 0<L≤D, D representing the thickness of the porous layer **10B,** in the thickness direction of the porous layer **10B** from the surface of the porous layer **10B** on the perforated layer **10A** side, and the pores of the porous layer **10B** are not shown.

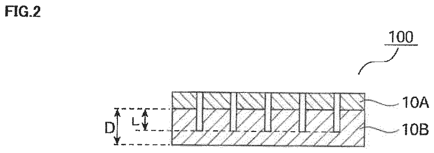

FIG. **2** is a schematic cross-sectional view for illustrating a sound-absorbing material according to a more specific embodiment of the present invention. In FIG. **2****,** a sound-absorbing material **100** of the present invention includes a perforated layer **10A** and a porous layer **10B.** In FIG. **2****,** the perforated layer **10A** and the porous layer **10B** serve as outermost layers. In FIG. **2****,** the sound-absorbing material **100** of the present invention has hole portions **1** extending from the surface of the perforated layer **10A** opposite to the porous layer **10B** to a depth of the length L, provided that the length L satisfies 0<L≤D, D representing the thickness of the porous layer **10B,** in the thickness direction of the porous layer **10B** from the surface of the porous layer **10B** on the perforated layer **10A** side. In FIG. **2****,** the length L satisfies 0<L<D. In FIG. **2****,** the pores of the porous layer **10B** are not shown.

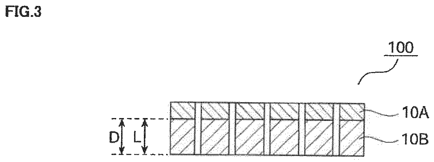

FIG. **3** is a schematic cross-sectional view for illustrating a sound-absorbing material according to a more specific embodiment of the present invention. In FIG. **3****,** a sound-absorbing material **100** of the present invention includes a perforated layer **10A** and a porous layer **10B**. In FIG. **3****,** the perforated layer **10A** and the porous layer **10B** serve as outermost layers. In FIG. **3****,** the sound-absorbing material **100** of the present invention has hole portions **1** extending from the surface of the perforated layer **10A** opposite to the porous layer **10B** to a depth of the length L, provided that the length L satisfies 0<L≤D, D representing the thickness of the porous layer **10B,** in the thickness direction of the porous layer **10B** from the surface of the porous layer **10B** on the perforated layer **10A** side. In FIG. **3****,** the length L satisfies L=D. In FIG. **3****,** the pores of the porous layer **10B** are not shown.

The sound-absorbing material of the present invention has a total thickness of preferably less than 300 mm, more preferably from 1 mm to 200 mm, still more preferably from 3 mm to 100 mm, particularly preferably from 5 mm to 50 mm. When the total thickness of the sound-absorbing material of the present invention falls within the above-mentioned range, the sound-absorbing material is thin, and hence can be used for various purposes each requiring a thin sound-absorbing material.

The average density of the sound-absorbing material of the present invention is preferably 300 kg/m³ or less, more preferably from 1 kg/m³ to 200 kg/m³, still more preferably from 5 kg/m³ to 150 kg/m³, particularly preferably from 10 kg/m³ to 100 kg/m³, most preferably from 20 kg/m³ to 50 kg/m³. When the density of the sound-absorbing material of the present invention falls within the above-mentioned range, a sound-absorbing material that is more lightweight and is excellent in low-frequency sound-absorbing property can be provided.

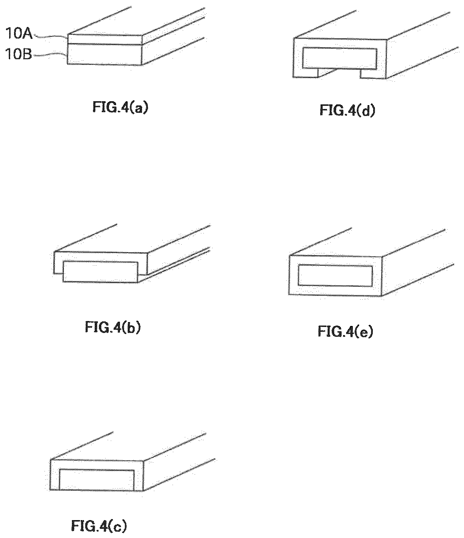

The sound-absorbingmaterial of the present invention may adopt an embodiment in which, as illustrated in the perspective view of FIG. **4(a)****,** the perforated layer **10A** does not cover side surfaces of the sound-absorbing material, may adopt an embodiment in which, as illustrated in the perspective view of FIG. **4(b)****,** the perforated layer **10A** covers part of the side surfaces, may adopt an embodiment in which, as illustrated in the perspective view of FIG. **4(c)**, the perforated layer **10A** covers the entire side surfaces, may adopt an embodiment in which, as illustrated in the perspective view of FIG. **4(d)****,** the perforated layer **10A** covers the entire side surfaces and part of the back surface of the sound-absorbing material, or may adopt an embodiment in which, as illustrated in the perspective view of FIG. **4(e)**, the perforated layer **10A** covers the entire side surfaces and the entire back surface. In addition, the sound-absorbing material of the present invention may adopt an embodiment in which the part covering at least part of the side surfaces or the part covering at least part of the back surface in the embodiment illustrated in FIG. **4(b),** FIG. **4(c),** FIG. **4(d),** or FIG. **4(e)** is a layer other than the perforated layer **10A.**

At least part of each of the end surfaces of the sound-absorbing material of the present invention in its lengthwise direction may be blocked with any appropriate layer to the extent that the effect of the present invention is not impaired. In addition, the end surfaces of the sound-absorbing material of the present invention in its lengthwise direction may each be blocked through the deformation of a cross-sectional shape by pressing or the like.

The sound-absorbing material of the present invention is thin and lightweight and is excellent in low-frequency sound-absorbing property, and hence can be adopted in various applications. The sound-absorbing material of the present invention can express an extremely excellent sound-absorbing property in a low-frequency region, and hence can be adopted, for example, as a sound-absorbing material for a tire, in particular, as a measure against a cavernous resonance. Particularly when the sound-absorbing material of the present invention is adopted as a sound-absorbing material for a tire, it is preferred that an excellent sound-absorbing property be expressed in the region of from 200 Hz to 300 Hz. When the sound-absorbing material of the present invention is used as a sound-absorbing material for a tire, the embodiment illustrated in FIG. **4(b),** FIG. **4(c),** FIG. **4(d),** or FIG. **4(e)** is preferred, and the embodiment illustrated in FIG. **4(c),** FIG. **4(d),** or FIG. **4(e)** is more preferred, from the viewpoint of allowing a more excellent sound-absorbing property in a tire to be expressed.

When the sound-absorbing material of the present invention is used as a sound-absorbing material for a tire, any one of its perforated layer side and porous layer side may be arranged on a tire side, and from the viewpoint of allowing a more excellent sound-absorbing property in a tire to be expressed, it is preferred that the porous layer side be fixed to the tire side. Any appropriate means maybe adopted as means for fixing the sound-absorbing material of the present invention to the tire depending on an environment in which the tire is required to be used. As such means, for example, there is given an acrylic double-sided tape for a tire to be infrequently used in a low-temperature environment, and there is given a rubber-based double-sided tape for a tire to be frequently used in a low-temperature environment.

An example of the acrylic double-sided tape serving as the means for fixing the sound-absorbing material of the present invention to the tire is an acrylic double-sided tape that includes an acrylic pressure-sensitive adhesive layer formed of a pressure-sensitive adhesive composition including a (meth) acrylic polymer obtained by polymerizing a monomer composition containing an alkyl (meth)acrylate (e.g., 2-ethylhexyl acrylate), (meth) acrylic acid, and an epoxy group-containing (meth)acrylate (e.g., glycidyl methacrylate) and a cross-linking agent (e.g., an isocyanate-based cross-linking agent) (e.g., a base material-less double-sided tape having a configuration "acrylic pressure-sensitive adhesive layer/separator").

The thickness of the acrylic double-sided tape serving as the means for fixing the sound-absorbing material of the present invention to the tire is preferably 360 µm or less, more preferably 260 µm or less, still more preferably 160 µm or less, particularly preferably 60 µm or less. The lower limit of the thickness is preferably 4 µm or more, more preferably 20 µm or more, still more preferably 30 µm or more, particularly preferably 40 µm or more.

The pressure-sensitive adhesive strength of the acrylic pressure-sensitive adhesive layer of the acrylic double-sided tape serving as the means for fixing the sound-absorbing material of the present invention to the tire at a time when a test piece obtained by bonding the acrylic pressure-sensitive adhesive layer to a backing material (PET#25) is pressure-bonded by one pass back and forth with a 2 kg roller to a rubber plate (butyl rubber) at a temperature of 23°C and a humidity of 50%RH, followed by aging at a temperature of 100°C for 30 minutes, and then the test piece is peeled from the rubber plate at a temperature of 100°C, a peel angle of 180 degrees, and a peel rate of 300 mm/min is preferably from 0.1 N/20 mm to 100 N/20 mm, more preferably from 0.3 N/20 mm to 50 N/20 mm, still more preferably from 0.5 N/20 mm to 30 N/20 mm, particularly preferably from 0.7 N/20 mm to 10 N/20 mm, most preferably from 1 N/20 mm to 5 N/20 mm.

An example of the rubber-based double-sided tape serving as the means for fixing the sound-absorbing material of the present invention to the tire is a rubber-based double-sided tape that includes a rubber-based pressure-sensitive adhesive layer formed of a pressure-sensitive adhesive composition containing a styrene-based elastomer (e.g., SIS) and a cross-linking agent (e.g., an isocyanate-based cross-linking agent) (e.g., a double-sided tape having a configuration "rubber-based pressure-sensitive adhesive layer/non-woven fabric/rubber-based pressure-sensitive adhesive layer/separator") .

The thickness of the rubber-based double-sided tape serving as the means for fixing the sound-absorbing material of the present invention to the tire is preferably 360 µm or less, more preferably 290 µm or less, still more preferably 220 µm or less, particularly preferably 150 µm or less. The lower limit of the thickness is preferably 4 µm or more, more preferably 40 µm or more, still more preferably 80 µm or more, particularly preferably 120 µm or more.

The pressure-sensitive adhesive strength of the rubber-based pressure-sensitive adhesive layer of the rubber-based double-sided tape serving as the means for fixing the sound-absorbing material of the present invention to the tire at a time when a test piece obtained by bonding the rubber-based pressure-sensitive adhesive layer to a backing material (PET#25) is pressure-bonded by one pass back and forth with a 2 kg roller to a rubber plate (butyl rubber) at a temperature of 23°C and a humidity of 50%RH, followed by aging at a temperature of 100°C for 30 minutes, and then the test piece is peeled from the rubber plate at a temperature of 100°C, a peel angle of 180 degrees, and a peel rate of 300 mm/min is preferably from 0.1 N/20 mm to 100 N/20 mm, more preferably from 0.3 N/20 mm to 50 N/20 mm, still more preferably from 0.5 N/20 mm to 30 N/20 mm, particularly preferably from 0.7 N/20 mm to 10 N/20 mm, most preferably from 1 N/20 mm to 5 N/20 mm.

### <Perforated Layer>

The sound-absorbing material of the present invention has a plurality of hole portions extending from the surface of the perforated layer opposite to the porous layer to a depth of the length L, provided that the length L satisfies 0<L≤D, D representing the thickness of the porous layer, in the thickness direction of the porous layer from the surface of the porous layer on the perforated layer side. That is, the perforated layer has a plurality of through-holes (constituting part of the hole portions) in its thickness direction. Any appropriate shape, such as a perfectly circular shape, an elliptical shape, a triangular shape, a quadrangular shape, a polygonal shape, or a slit shape, maybe adopted as the shape of each of surface opening portions of the perforated layer formed by the through-holes (i.e., formed by the hole portions) . Of such shapes, from the viewpoint of allowing the effect of the present invention to be further expressed, and the viewpoint of the ease of production, a perfectly circular shape, an elliptical shape, or a quadrangular shape is preferred, and a perfectly circular shape is more preferred. The surface opening portions of the perforated layer formed by the plurality of through-holes of the perforated layer (i.e., formed by the plurality of hole portions of the perforated layer) may have only one kind of shape, or may have two or more kinds of shapes.

The circle-equivalent hole diameter of each of the plurality of the surface opening portions of the perforated layer formed by the plurality of through-holes of the perforated layer (i.e., formed by the plurality of hole portions of the perforated layer) is preferably 1 mm or more, more preferably from 1 mm to 100 mm, still more preferably from 2 mm to 50 mm, still more preferably from 3 mm to 30 mm, still more preferably from 4 mm to 20 mm, particularly preferably from 5 mm to 10 mm, from the viewpoint of allowing the effect of the present invention to be further expressed. The circle-equivalent hole diameter of each surface opening portion is the diameter of a circle having the same area as the surface opening portion.

The surface opening ratio of the perforated layer, which is the ratio of the plurality of surface opening portions of the perforated layer in the entire surface of the perforated layer, is preferably 20% or less, more preferably from 0.01% to 20%, still more preferably from 0.05% to 10%, still more preferably from 0.1% to 5%, still more preferably from 0.2% to 4%, particularly preferably from 0.3% to 3%, most preferably from 0.4% to 2%, from the viewpoint of allowing the effect of the present invention to be further expressed. The surface opening ratio is represented by (Sₒₚₑₙ/Sₜₒₜₐₗ)×100 (%), where Sₜₒₜₐₗ (mm²) represents the area of the entire surface (including the surface opening portions), and Sₒₚₑₙ (mm²) represents the total area of the plurality of surface opening portions in the surface.

The thickness of the perforated layer is preferably less than 1 mm, more preferably from 0.0001 mm to 0.9999 mm, still more preferably from 0.0005 mm to 0.5 mm, still more preferably from 0.001 mm to 0.2 mm, still more preferably from 0.001 mm to 0.1 mm, still more preferably from 0.001 mm to 0.05 mm, particularly preferably from 0.002 mm to 0.03 mm, most preferably from 0.004 mm to 0.015 mm. By virtue of the thickness of the perforated layer being less than 1 mm, in combination with other features of the present invention, a sound-absorbing material that is thinner and more lightweight and is more excellent in low-frequency sound-absorbing property can be provided.

The area density of the perforated layer is preferably 1,000 g/m² or less, more preferably from 0.05 g/m² to 1,000 g/m², still more preferably from 0.5 g/m² to 500 g/m², particularly preferably from 0.5 g/m² to 200 g/m², most preferably from 3 g/m² to 50 g/m², from the viewpoint of allowing the effect of the present invention to be further expressed.

Any appropriate material may be adopted as a material for forming the perforated layer to the extent that the effect of the present invention is not impaired. Such material is preferably at least one kind selected from a resin, a metal, a rubber, an inorganic material, a woven fabric, and a non-woven fabric, from the viewpoint of allowing the effect of the present invention to be further expressed. Specific examples of the resin that may serve as the material for forming the perforated layer include polyester resins (e.g., polyethylene terephthalate, polybutylene terephthalate, and polyethylene naphthalate), acrylic resins, polyolefin-based resins (e.g. , polyethylene and polypropylene), polycarbonate-based resins, styrene-based resins, and polyvinyl chloride. Specific examples of the metal that may serve as the material for forming the perforated layer include aluminum, stainless steel (SUS), iron, and copper. When the material for forming the perforated layer is a resin, a resin having a layer shape, such as a resin film (e. g. , a polyethylene terephthalate film), an adhesive tape, or a pressure-sensitive adhesive tape, may be adopted as it is, or a resin layer formed by applying a resin material capable of forming a coating film may beadopted. Inaddition, for example, a resin layer formed by melting a porous layer as in melt foam processing may be adopted.

The surface of the perforated layer may be subjected to any appropriate surface treatment or surface processing to the extent that the effect of the present invention is not impaired.

### <Porous Layer>

The porous layer has a plurality of voids (pores) . The pores of the porous layer are not particularly limited in structure, and may have a structure in which at least part of each of the voids is three-dimensionally open (e.g., an open-cell structure).

The average circle-equivalent hole diameter of a plurality of surface opening portions of the porous layer formed by the pores of the porous layer is preferably smaller than the circle-equivalent hole diameter of each of the plurality of surface opening portions of the perforated layer formed by the plurality of through-holes of the perforated layer (i.e., formed by the plurality of holeportions of the perforated layer).

The average circle-equivalent hole diameter of the plurality of surface opening portions of the porous layer formed by the pores of the porous layer is preferably less than 5,000 µm, more preferably from 1 µm to 5,000 µm, still more preferably from 10 µm to 4,000 µm, still more preferably from 20 µm to 3, 000 µm, still more preferably from 50 µm to 2,000 µm, particularly preferably from 100 µm to 1,000 µm, from the viewpoint of allowing the effect of the present invention to be further expressed. The average circle-equivalent hole diameter of surface opening portions is the average diameter of circles having the same areas as the surface opening portions.

The thickness of the porous layer is preferably 1 mm or more, more preferably from 2 mm to 200 mm, still more preferably from 3 mm to 100 mm, particularly preferably from 4 mm to 50 mm, most preferably from 5 mm to 30 mm. When the thickness of the porous layer falls within the above-mentioned range, a sound-absorbing material that is thinner and more lightweight and is excellent in low-frequency sound-absorbing property can be provided.

The density of the porous layer is preferably 300 kg/m³ or less, more preferably from 1 kg/m³ to 300 kg/m³, still more preferably from 1 kg/m³ to 200 kg/m³, still more preferably from 1 kg/m³ to 100 kg/m³, still more preferably from 5 kg/m³ to 70 kg/m³, particularly preferably from 5 kg/m³ to 50 kg/m³, most preferably from 10 kg/m³ to 30 kg/m³. When the density of the porous layer falls within the above-mentioned range, a sound-absorbing material that is more lightweight and is excellent in low-frequency sound-absorbing property can be provided.

The sound-absorbing material of the present invention has a plurality of hole portions extending from the surface of the perforated layer opposite to the porous layer to a depth of the length L, provided that the length L satisfies 0<L≤D, D representing the thickness of the porous layer, in the thickness direction of the porous layer from the surface of the porous layer on the perforated layer side. That is, the porous layer has a plurality of hole portions formed with a depth of the length L, provided that the length L satisfies 0<L≤D, D representing the thickness of the porous layer, in its thickness direction from the surface of the porous layer on the perforated layer side.

The circle-equivalent hole diameter of each of the plurality of surface opening portions of the porous layer formed by the plurality of hole portions that the porous layer may have is preferably 1 mm or more, more preferably from 1 mm to 100 mm, still more preferably from 2 mm to 50 mm, still more preferably from 3 mm to 30 mm, still more preferably from 4 mm to 20 mm, particularly preferably from 5 mm to 10 mm, from the viewpoint of allowing the effect of the present invention to be further expressed. The circle-equivalent hole diameter of each surface opening portion is the diameter of a circle having the same area as the surface opening portion.

The surface opening ratio of the porous layer, which is the ratio of the plurality of surface opening portions of the porous layer formed by the plurality of hole portions that the porous layer may have in the entire surface of the porous layer, is preferably 20% or less, more preferably from 0.001% to 20%, still more preferably from 0.01% to 10%, still more preferably from 0.1% to 5%, still more preferably from 0.2% to 4%, particularly preferably from 0.3% to 3%, most preferably from 0.4% to 2%, from the viewpoint of allowing the effect of the present invention to be further expressed. The surface opening ratio is represented by (Sₒₚₑₙ/Sₜₒₜₐₗ)×100 (%), where Sₜₒₜₐₗ (mm²) represents the area of the entire surface (including the surface opening portions), and Sₒₚₑₙ (mm²) represents the total area of the plurality of surface opening portions in the surface.

Any appropriate material may be adopted as a material for forming the porous layer to the extent that the effect of the present invention is not impaired. Such material is preferably at least one kind selected from a porous polymer material, a porous metal material, a porous inorganic material, a porous woven fabric, a porous non-woven fabric, a fibrous material, and a polymer monolithic material, from the viewpoint of allowing the effect of the present invention to be further expressed. Specific examples of the porous polymer material that may serve as the material for forming the porous layer include polyurethane foam, polystyrene foam, polyolefin (e.g., polyethylene or polypropylene) foam, and ethylene-propylene-diene rubber (EPDM) foam. Any appropriate structure may be adopted as the porous structure of the porous polymer material depending on purposes . Such structure may be, for example, a closed-cell structure in which each of cells formed by foaming is closed or an open-cell structure in which at least part of each of the cells is open. Specific examples of the fibrous material that may serve as the material for forming the porous layer include glass wool, rock wool, and a felt material. A specific example of the polymer monolithic material that may serve as the material for forming the porous layer is such a monolithic material made of a silicone as described in JP 2014-61457 A.

### Examples

Now, the present invention is specifically described by way of Examples. However, the present invention is by no means limited to these Examples. The terms "part (s) " and "%" in Examples are by mass unless otherwise stated.

### <Measurement of Sound Absorption Coefficient>

A sound absorption coefficient was measured as a normal incidence sound absorption coefficient using an acoustic tube.

Specifically, a 4206 large tube manufactured by Bruel&Kjaer was used, and a Φ100 mm sample was produced and subjected to measurement in conformity with JIS A 1405-2. The measurement was performed under a state in which the entire back surface of the sample was bonded to the wall surface of the acoustic tube with an acrylic double-sided adhesive tape (thickness=150 µm, manufactured by Nitto Denko Corporation, product name: No. 512) so as to prevent the influence of bending vibration.

In addition, the measurement was performed under a state in which a gap was filled with silicone grease (G501 from Shin-Etsu Chemical Co., Ltd.) so as to prevent the influence of a cross-section.

### [Example 1]

To a polyethylene terephthalate film (thickness=4.8 µm, manufactured by Toray Industries, Inc., product name: Lumirror), urethane foam (thickness=20 mm, manufactured by Inoac Corporation, product name: CALMFLEX F2) was bonded. For the bonding, an acrylic double-sided adhesive tape (thickness=50 µm, manufactured by Nitto Denko Corporation, product name: GA5905) was used.

ϕ5 mm through-holes were formed in the resultant laminate at a surface opening ratio of 0.25%.

Thus, a sound-absorbing material (1) having a configuration "[perforated layer]/[acrylic double-sided adhesive tape]/[urethane foam (porous layer)]" was obtained.

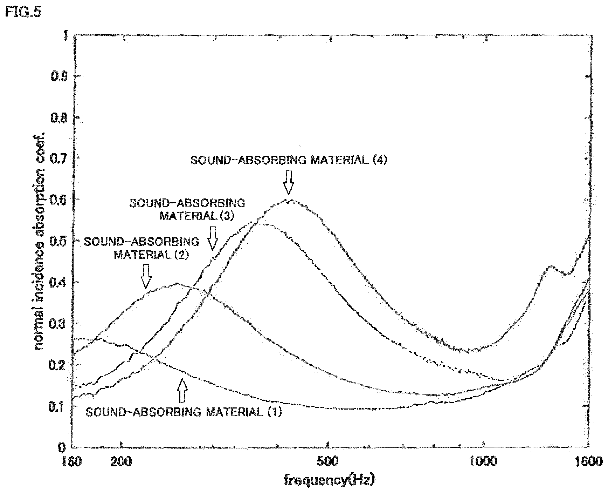

The results are shown in FIG. **5****.**

### [Example 2]

A sound-absorbing material (2) having a configuration "[perforated layer]/[acrylic double-sided adhesive tape] / [urethane foam (porous layer)] " was obtained in the same manner as in Example 1 except that the surface opening ratio at which the through-holes were formed was changed to 0.5%.

The results are shown in FIG. **5****.**

### [Example 3]

A sound-absorbing material (3) having a configuration "[perforated layer]/[acrylic double-sided adhesive tape] / [urethane foam (porous layer)] " was obtained in the same manner as in Example 1 except that the surface opening ratio at which the through-holes were formed was changed to 0.75%.

The results are shown in FIG. **5****.**

### [Example 4]

A sound-absorbing material (4) having a configuration "[perforated layer]/[acrylic double-sided adhesive tape] / [urethane foam (porous layer)] " was obtained in the same manner as in Example 1 except that the surface opening ratio at which the through-holes were formed was changed to 1.0%.

The results are shown in FIG. **5****.**

### [Example 5]

To a polyethylene terephthalate film (thickness=4.8 µm, manufactured by Toray Industries, Inc., product name: Lumirror), urethane foam (thickness=10 mm, manufactured by Inoac Corporation, product name: CALMFLEX F2) was bonded. For the bonding, an acrylic double-sided adhesive tape (thickness=50 µm, manufactured by Nitto Denko Corporation, product name: GA5905) was used.

Further, to the urethane foam side of the resultant laminate, urethane foam (thickness=10 mm, manufactured by Inoac Corporation, product name: CALMFLEX F2) was further bonded. For the bonding, an acrylic double-sided adhesive tape (thickness=150 µm, manufactured by Nitto Denko Corporation, product name: No. 512) was used.

ϕ5 mm through-holes were formed in the resultant laminate at a surface opening ratio of 0.25%.

Thus, a sound-absorbing material (5) having a configuration "[perforated layer]/[acrylic double-sided adhesive tape] / [urethane foam (porous layer)] / [perforated layer] / [urethane foam (porous layer)]," the sound-absorbing material (5) having a plurality of through-holes extending from the surface of the perforated layer opposite to the porous layer to the surface of the porous layer opposite to the perforated layer, was obtained.

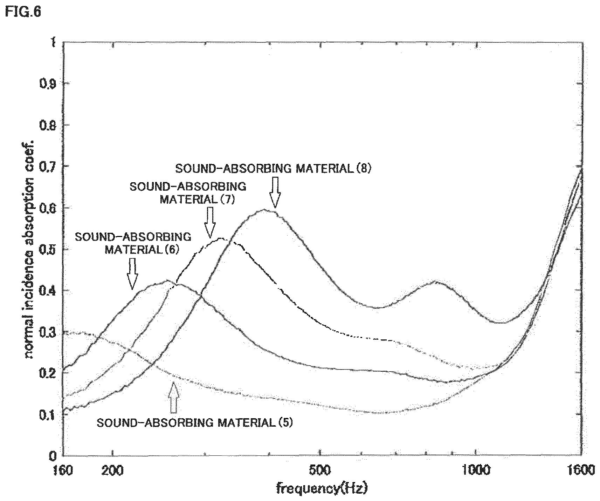

The results are shown in FIG. **6****.**

### [Example 6]

A sound-absorbing material (6) having a configuration "[perforated layer]/[acrylic double-sided adhesive tape] / [urethane foam (porous layer)] / [perforated layer] / [urethane foam (porous layer)]," the sound-absorbing material (6) having a plurality of through-holes extending from the surface of the perforated layer opposite to the porous layer to the surface of the porous layer opposite to the perforated layer, was obtained in the same manner as in Example 5 except that the surface opening ratio at which the through-holes were formed was changed to 0.5%.

The results are shown in FIG. **6****.**

### [Example 7]

A sound-absorbing material (7) having a configuration "[perforated layer]/[acrylic double-sided adhesive tape] / [urethane foam (porous layer)] / [perforated layer] / [urethane foam (porous layer)]," the sound-absorbing material (7) having a plurality of through-holes extending from the surface of the perforated layer opposite to the porous layer to the surface of the porous layer opposite to the perforated layer, was obtained in the same manner as in Example 5 except that the surface opening ratio at which the through-holes were formed was changed to 0.75%.

The results are shown in FIG. **6****.**

### [Example 8]

A sound-absorbing material (8) having a configuration "[perforated layer]/[acrylic double-sided adhesive tape] / [urethane foam (porous layer)] / [perforated layer] / [urethane foam (porous layer)], " the sound-absorbing material (8) having a plurality of through-holes extending from the surface of the perforated layer opposite to the porous layer to the surface of the porous layer opposite to the perforated layer, was obtained in the same manner as in Example 5 except that the surface opening ratio at which the through-holes were formed was changed to 1.0%.

The results are shown in FIG. **6****.**

### [Comparative Example 1]

Urethane foam (thickness=20 mm, manufactured by Inoac Corporation, product name: CALMFLEX F2) was used as a sound-absorbing material (C1).

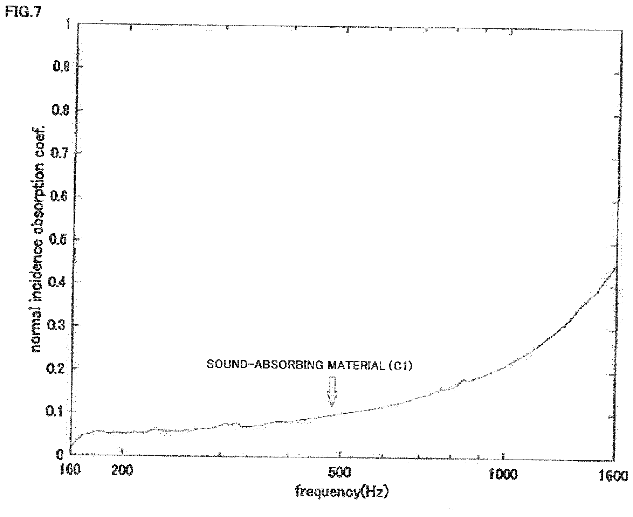

The results are shown in FIG. **7****.**

### [Comparative Example 2]

ϕ5 mm through-holes were formed in a polyethylene terephthalate film (thickness=4.8 µm, manufactured by Toray Industries, Inc., product name: Lumirror) at a surface opening ratio of 0.25%, and the resultant was used as a perforated layer.

To the perforated layer, urethane foam (thickness=20 mm, manufactured by Inoac Corporation, product name: CALMFLEX F2) was bonded. For the bonding, an acrylic double-sided adhesive tape (thickness=50 µm, manufactured by Nitto Denko Corporation, product name: GA5905) was used.

Thus, a sound-absorbing material (C2) having a configuration "[perforated layer]/[acrylic double-sided adhesive tape]/[urethane foam]" was obtained.

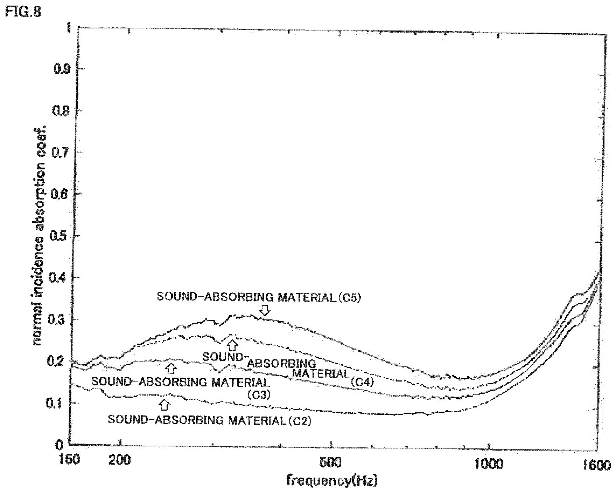

The results are shown in FIG. **8****.**

### [Comparative Example 3]

A sound-absorbing material (C3) having a configuration "[perforated layer]/[acrylic double-sided adhesive tape]/[urethane foam]" was obtained in the same manner as in Comparative Example 2 except that the surface opening ratio at which the through-holes were formed was changed to 0.5%.

The results are shown in FIG. **8****.**

### [Comparative Example 4]

A sound-absorbing material (C4) having a configuration "[perforated layer]/[acrylic double-sided adhesive tape] / [urethane foam]" was obtained in the same manner as in Comparative Example 2 except that the surface opening ratio at which the through-holes were formed was changed to 0.75%.

The results are shown in FIG. 8.

### [Comparative Example 5]

A sound-absorbing material (C5) having a configuration "[perforated layer]/[acrylic double-sided adhesive tape] / [urethane foam]" was obtained in the same manner as in Comparative Example 2 except that the surface opening ratio at which the through-holes were formed was changed to 1.0%.

The results are shown in FIG. **8****.**

### Industrial Applicability

The sound-absorbing material of the present invention is applicable, for example, as a sound-absorbing material for a tire.

### Reference Signs List

- **100**: sound-absorbing material
- **10A**: perforated layer
- **10B**: porous layer
- **1**: hole portion

## Claims

1. A sound-absorbing material, comprising a laminated structure including:
a perforated layer; and
a porous layer,
wherein the sound-absorbing material has a plurality of hole portions extending from a surface of the perforated layer opposite to the porous layer to a depth of a length L, provided that the length L satisfies 0<L≤D, D representing a thickness of the porous layer, in a thickness direction of the porous layer from a surface of the porous layer on a perforated layer side.

2. The sound-absorbing material according to claim 1, wherein the length L satisfies (0.2×D)≤L≤D.

3. The sound-absorbing material according to claim 1, wherein a plurality of surface opening portions of the perforated layer formed by the plurality of hole portions have a maximum hole diameter of 1 mm or more.

4. The sound-absorbing material according to claim 3, wherein a surface opening ratio of the perforated layer, which is a ratio of the plurality of surface opening portions in an entire surface of the perforated layer, is 20% or less.

5. The sound-absorbing material according to any one of claims 1 to 4, wherein the perforated layer has a thickness of less than 1 mm.

6. The sound-absorbing material according to any one of claims 1 to 5, wherein the porous layer has a thickness of 1 mm or more.

7. The sound-absorbing material according to any one of claims 1 to 6, wherein the sound-absorbing material has a total thickness of less than 300 mm.

8. The sound-absorbing material according to any one of claims 1 to 7, wherein a material for forming the perforated layer comprises at least one kind selected from a resin, a metal, a rubber, an inorganic material, a woven fabric, and a non-woven fabric.

9. The sound-absorbing material according to any one of claims 1 to 8, wherein a material for forming the porous layer comprises at least one kind selected from a porous polymer material, a porous metal material, a porous inorganic material, a porous woven fabric, a porous non-woven fabric, a fibrous material, and a polymer monolithic material.
